# EUROPEAN PATENT APPLICATION

(11) **EP 2 093 952 A1**
(43) Date of publication of application: **26.08.2009**
(21) Application number: 08003209.7
(22) Date of filing: 21.02.2008
(51) Int. Cl.: H04L 12/56

(54) **Method and device for processing data in an MPLS domain and communication system comprising such device**

(71) Applicant: Nokia Siemens Networks Oy, 02610 Espoo (FI)
(72) Inventor: Frantz, Michael, 81737 München (DE); Hof, Axel, 81240 Olching (DE)
(74) Representative: Bruglachner, Thomas E.

(57) **Abstract**

A method and a device for processing data in an MPLS domain comprising several network elements are provided, wherein at least one network element is a TDM network element providing a repeater functionality for a data packet received. Further, a communication system comprising such a device is suggested.

## Description

The invention relates to a method and to a device for processing data in an MPLS domain and to a communication system comprising such device.

Multi Protocol Label Switching (MPLS) is a data-carrying mechanism that belongs to the family of packet-switched networks. MPLS operates at an TCP/IP model layer that is generally considered to lie between traditional definitions of Layer 2 (data link layer) and Layer 3 (network layer), and thus is often referred to as a "Layer 2.5" protocol. It was designed to provide a unified data-carrying service for both circuit-based clients and packet-switching clients which provide a datagram service model. The MPLS architecture is defined in the IETF RFC3031 and a corresponding encoding is described in IETF RFC3032.

Regarding MPLS, a label (a number) is supplied to a packet header and is used as an address (e.g., an IP or an Ethernet address) to direct traffic to its destination. In MPLS, customers' packets can be conveyed based on the destination address seamlessly to other locations without any further modification. Traffic engineering methods allow utilizing a network's capacity more efficiently.

An MPLS domain comprises Label Edge Routers (LERs) that reside at the edge of the MPLS domain and Label Switch Routers (LSRs) that are located within the MPLS domain. The Label Edge Routers cope with both MPLS frames and native-mode user traffic while said Label Switch Routers preferably process MPLS frames only.

Labels of the MPLS header may be distributed via a Label Distribution Protocol (LDP) or via Resource Reservation Protocol - Traffic Engineering (RSVP-TE).

A Martini draft is a method for transporting layer 2 customer data over a scalable provider MPLS network. Here, MPLS is used to emulate virtual channels (VCs), wherein a particular user is unaware of the fact that the same physical link is being shared by other users as well.

The MPLS technology is adopted by the IETF to provide virtual channel (VC) provisioning over multi-protocol networks.

For interconnections of LER- or LSR-type routers over TDM networks, e.g. via SDH, the TDM network element has to terminate the Ethernet network and act like an LSR. If the control protocols are to distribute and/or configure MPLS labels and corresponding MAC addresses, a configuration effort is complex.

In order for a TDM node to provide dynamic MPLS functionality, all protocols necessary would have to be implemented and supported by such TDM node. In case of a static MPLS approach, lots of configuration effort would be necessary to set up each such TDM node manually.

In addition traffic engineering measures which are defined on the MPLS layer cannot be considered for the forwarding of packets in the edge node of a TDM network.

The problem to be solved is to overcome the disadvantages stated above and in particular to provide an efficient solution for utilizing TDM networks, in particular TDM nodes for an MPLS network.

This problem is solved according to the features of the independent claims. Further embodiments result from the depending claims.

In order to overcome this problem, a method for processing data in an MPLS domain comprising several network elements, wherein at least one network element is a TDM network element providing a repeater functionality for a data packet received.

Said MPLS domain may in particular relate to any network or portion thereof enabling a Multi Protocol Label Switching or any derivate thereof.

This advantageously allows utilization of TDM network elements for MPLS routing purposes without having to deploy the whole protocol stack with each such TDM network element. Hence, the TDM network element is advantageously capable of conveying information via MPLS.

It is a particular advantage that the TDM network element just provides a repeater functionality and does not have to unwrap and re-wrap the Ethernet frame and/or the MPLS packet.

In an embodiment, the method suggested comprises the steps:
- the TDM network element determines an Ethernet header information and/or an MPLS header information of a data packet received at the TDM network element; and
- forwards the data packet according to the Ethernet header information and/or the MPLS header information determined.

In another embodiment, the data packet is forwarded without amending the data packet at the TDM network element.

In a further embodiment, the data packet is forwarded based on an MPLS label as an index for a virtual channel.

In a next embodiment, said MPLS label is assigned to a TDM channel at said TDM network element.

It is also an embodiment that a GMPLS control plane is utilized for setting up a virtual channel and an associated MPLS path.

Pursuant to another embodiment, the TDM network element is a network element of at least one of the following environments:
- an SDH network;
- a SONET network;
- a DWDM network.

According to an embodiment, the TDM network element is transparent for any IP router connected to the TDM network element.

According to another embodiment, the TDM network element is one element of a TDM network that is provided within said MPLS domain.

The problem stated above is also solved by a device for processing data comprising and or associated with a processor unit and/or a hard-wired circuit and/or a logic device that is equipped and/or arranged such that the method as described herein is executable thereon.

According to an embodiment, the device is a communication device, in particular a TDM network element and/or a SDH network element.

The problem stated supra is further solved by a communication system comprising the device as described herein.

Embodiments of the invention are shown and illustrated in the following figures:
- Fig.1: shows a network environment comprising an access and metro network, a core network and central components for applications;
- Fig.2: shows a network environment with a MPLS domain comprising several SDH network elements that are utilized for conveying MPLS traffic.

The approach provided herewith allows for snooping of MPLS packets without a termination of the Ethernet frame. Hence, the Ethernet frames can be forwarded to a Virtual Channel (VC) on basis of the MPLS label only, i.e. the MPLS label is used as an index for the virtual channel.

A next hop of a router in particular is the router port of an adjacent router. Thus, the Ethernet frame as well as the MPLS label are not dropped inside the TDM network. Instead, the TDM network is transparent for the IP routers connected to the TDM network.

A mapping of traffic for the MPLS label to a TDM channel, e.g., a Virtual Circuit x (VCx) is sufficient. Therefore, only the configuration of the MPLS label itself is requested. The label is assigned to a TDM channel, e.g., VCxt.

By this, the in- and outgoing ports are defined. The SDH (or TDM) node handles the Ethernet encapsulated MPLS packet transparently. This means, no Ethernet termination and/or no MPLS termination take(s) place. Only, the MPLS label is determined (snooped) and used for a looking up a subsequent address in the forwarding table.

The routers can still run their control protocols like an Address Resolution Protocol (ARP) or an Open Shortest Path First (OSPF) protocol to learn the network topology, the addresses and the router adjacencies. The router sets the destination MAC address of the port of the router to which a packet should be sent to as in a pure IP network. As a result, the TDM network may forward the Ethernet frame and/or the MPLS packet transparently without changing the MPLS label.

The snooping mechanism could be used for different TDM based mechanisms, e.g., SDH/SONET or DWDM. The configuration allows building a fixed assignment of an MPLS label to a virtual channel. Based on this virtual channel, some traffic engineering mechanism could do the restoration and distribution inside the TDM based network. These mechanisms are invisible for the router.

The snooping mechanism could be combined with a GMPLS control plane, wherein the GMPLs control plane takes care of the configuration of the virtual channel and an associated MPLS path.

In the TDM edge nodes, no MAC address learning is required, because the packets can be forwarded based on the information obtained by the MPLS label.

Traffic engineering measures of the L3 MPLS network can also be taken into account in the TDM network.

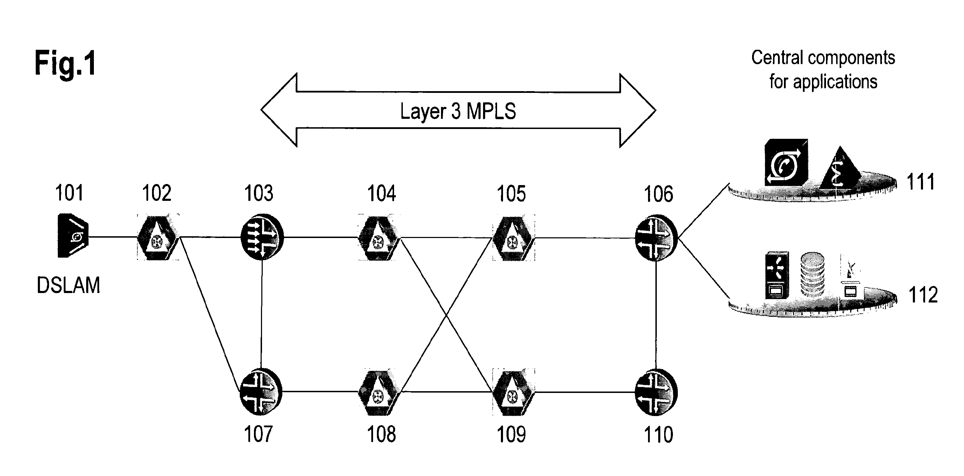

**Fig.1** shows a network environment comprising an access and metro network with a DSLAM 101 and a SDH network element 102. Further, a core network comprises LERs 103, 106, 107 and 110 and SDH network elements 104, 105, 108 and 109 that are deployed within said core network. To the LER 106, central components for applications 111 and 112 are connected.

According to Fig.1, a layer 3 MPLS service is provided across the LERs 103, 106, 107 and 110, wherein the SDH network elements 104, 105, 108 and 109 are used as LSRs transparently forwarding the MPLS traffic by snooping the Ethernet header and/or the MPLS header of the data packets. Hence, the data packet itself may remain unchanged.

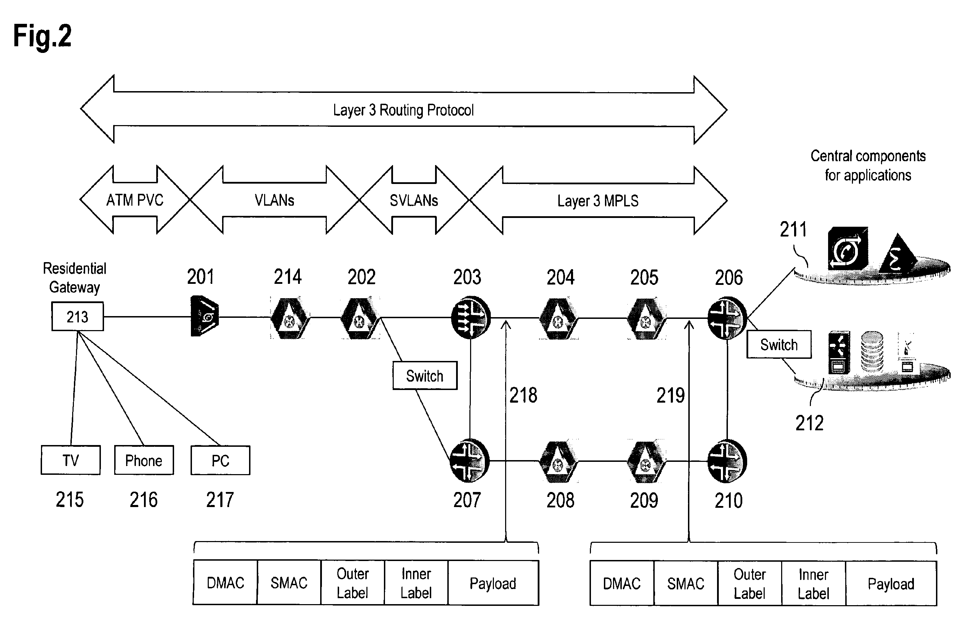

**Fig.2** shows a network environment comprising a residential gateway 213 to which a TV 215, a phone 216 and a PC 217 are connected. The residential gateway 213 is connected to a DSLAM 201, which is further connected to an SDH network element 214, which is connected to an SDH network element 202. The SDH network element 202 is connected via a switch with a LER 207 and also with a LER 203, which is also connected to the LER 207 and to an SDH network element 204. The SDH network element is connected via another SDH network element 205 with a LER 206 and the LER 207 is connected via an SDH network element 208 to an SDH network element 209, which is further connected to a LER 210. The LER 210 is connected to the LER 206. The LER 106 is connected to central components for applications 211 and 212 comprising, e.g., a SIP gateway, a VoIP server and a database.

A data packet 218 between the LER 203 and the SDH network element 204 comprises a destination MAC address (DMAC), a source MAC address (SMAC), an outer label, an inner label and a payload portion. A data packet 219 between the SDH network element 205 and the LER 206 comprises the same portions as the data packet 218.

The inner label comprises a VPN MPLS label, the outer label comprises a PSN tunnel MPLS label. The DMAC is a next hop MPLS router (here: LER 206) MAC address for an egress port. The SMAC is a local MPLS router (here: LER 203) source MAC address for the egress port.

At the ingress port of the SDH network element 204, an IP address and/or a MAC address does not have to be configured. Furthermore, the MAC address of the incoming packet is not terminated.

In addition, the packet may be supplied by an MPLS label and the packet is forwarded (via Ethernet port or VCG channel) according to this MPLS label.

A layer 3 routing protocol is hence established between the residential gateway 213 and the LERs 206 and 210.

An ATM permanent virtual channel may be established between the residential gateway 213 and the DSLAM 201. VLANs are configured between the DSLAM 201 and the SDH network element 202 and Stacking VLANs (SVLANs) are set up between the SDH network element 202 and the LERs 203 or 207. Layer 3 MPLS services are provided between the LERs 203, 207 and the LERs 206, 210.

This allows to efficiently interconnect a router with (existing) TDM equipment in a simple and efficient manner.

### Abbreviations:

- ARP: Address Resolution Protocol
- DSLAM: Digital Subscriber Line Access Multiplexer
- DWDM: Dense Wavelength-Division Multiplexing
- GMPLS: Generalized MPLS
- LDP: Label Distribution Protocol
- LER: Label Edge Router
- LSR: Label Switch Router
- MAC: Media Access Control
- MPLS: Multi Protocol Label Switching
- OSPF: Open Shortest Path First
- PSN: Packet Switched Network
- PVC: Permanent Virtual Channel
- RSVP-TE: Resource Reservation Protocol - Traffic Engineering
- SDH: Synchronous Digital Hierarchy
- TDM: Time division multiplexing
- VC: Virtual Channel
- VPN: Virtual Private Network

## Claims

1. A method for processing data in an MPLS domain comprising several network elements, wherein at least one network element is a TDM network element providing a repeater functionality for a data packet received.

2. The method according to claim 1, comprising the steps:
- the TDM network element determines an Ethernet header information and/or an MPLS header information of a data packet received at the TDM network element; and
- forwards the data packet according to the Ethernet header information and/or the MPLS header information determined.

3. The method according to claim 2, wherein the data packet is forwarded without amending the data packet at the TDM network element.

4. The method according to any of claims 2 or 3, wherein the data packet is forwarded based on an MPLS label as an index for a virtual channel.

5. The method according to claim 4, wherein said MPLS label is assigned to a TDM channel at said TDM network element.

6. The method according to any of claims 2 to 5, wherein a GMPLS control plane is utilized for setting up a virtual channel and an associated MPLS path.

7. The method according to any of the preceding claims, wherein the TDM network element is a network element of at least one of the following environments:
- an SDH network;
- a SONET network;
- a DWDM network.

8. The method according to any of the preceding claims, wherein the TDM network element is transparent for any IP router connected to the TDM network element.

9. The method according to any of the preceding claims, wherein the TDM network element is one element of a TDM network that is provided within said MPLS domain.

10. A device for processing data comprising a comprising and or associated with a processor unit and/or a hard-wired circuit and/or a logic device that is arranged such that the method as described herein is executable thereon.

11. The device according to claim 10, wherein said device is a communication device, in particular a TDM or SDH network element.

12. Communication system comprising the device according to any of claims 10 or 11.
